# EUROPEAN PATENT APPLICATION

(11) **EP 3 965 038 A1**
(43) Date of publication of application: **09.03.2022**
(21) Application number: 21195011.8
(22) Date of filing: 06.09.2021
(51) Int. Cl.: G06Q 20/16, G06Q 20/42

(54) **METHOD, SYSTEM AND COMPUTER READABLE STORAGE MEDIUM FOR HANDLING AUTOMATIC-PAYMENT AND NON-PAYMENT**

(30) Priority: 07.09.2020 KR 20200113883
(71) Applicant: ParkingCloud Co., Ltd., Seoul Yeongdeungpo-gu 07276 (KR)
(72) Inventor: SHIN, Sang Yong, Seoul 07548 (KR); HEO, Won Jin, Seoul 07276 (KR)
(74) Representative: Forresters IP LLP

(57) **Abstract**

A method performed on a system to handle automatic payment and non-payment is described. The method may include receiving, from a user using a service associated with the system, a first input indicating an absence of a payment means; in response to the reception of the first input, displaying collection clauses on a display of the system; receiving, from the user, a second input indicating an agreement for the collection clauses; generating, in response to the reception of the second input, a first verification code to display, on the display, the generated first verification code together with a guide for inputting a phone number; receiving, from the user, the phone number; making a call using the received phone number; receiving a second verification code through the call; determining that the first verification code and the second verification code are matched; and in response to the determining, transmitting information for payment using the phone number.

## Description

### TECHNICAL FIELD

The present disclosure relates to a system, a method, a non-transitory computer readable storage medium to handle payment of a user using an automatic payment terminal and non-payment of the user who does not have any payment means.

### BACKGROUND

Unless otherwise indicated herein, the materials described in this section are not prior art to the claims in this application and are not admitted as prior art by inclusion in this section.

Recently, the use of automatic payment terminals has been increased in order for, for example, reducing labor costs, serving convenience, *etc.* As the automatic payment terminals are generally used in the businesses, they can be found within various facilities visited and used in daily lives, such as restaurants, movie theaters, parking lots, convenience stores, *etc.* In using such automatic payment terminal, if a user is not able to pay the fees of the provided service, the service cannot be terminated, thereby limiting movement of the user, causing inconveniences to the other customers, and damaging the business providing the service. In order to avoid these problems, the user must have payment means for paying the service fees. However, the user of the service may face an unexpected situation, such as a loss or a theft of the payment means, and thus may have difficulty in paying the fees.

In this regard, Korean Patent No. 10-0751498 discloses a method for managing a plurality of street parking lots using automatic payment system including an integrated managing server and a related method. The integrated managing server herein may aggregate information of the occurred fees at each of the parking lots to issue a bill for the unpaid parking fees to the address of the owner of the related vehicle. Issuing the bill for the parking fees needs to involve collecting the information of the vehicle, and collecting such information of the vehicle cannot be applied to services of the other types of businesses. In order to issue a bill for the services in the other types of businesses, it is required to directly receive an address from the user, check the received address out and obtain a related agreement from the user. Typically, such utilization of the bill takes lots of time until the bill is delivered to the address and makes it difficult to manage the unpayment in real time. Further, the unpaid fees can be reminded just by reissuing the bill, and the problems, such as a loss of the delivered bill, *etc.,* can be occurred.

### SUMMARY

In order to solve the above-described problems, the present disclosure provides an automatic payment and non-payment handling system, method and non-transitory computer readable storage medium to forward information for payment to a user of the service, in particular, a user having difficulties of payment, such as due to a loss of the payment means to terminate the service. Further, the present disclosure provides a method to perform a non-payment settlement process through a third person who is an acquaintance of the user, in order to terminate the service even when the user does not have both a mobile phone and a payment means. In addition, the present disclosure provides a scheme to collect the fees when the payment is not processed properly by the user or the third person.

According to an embodiment of the present disclosure, a method performed on a system to handle automatic payment and non-payment is provided. The method may include receiving, from a user using a service associated with the system, a first input indicating an absence of a payment means; in response to the reception of the first input, displaying collection clauses on a display of the system; receiving, from the user, a second input indicating an agreement for the collection clauses; generating, in response to the reception of the second input, a first verification code to display the generated first verification code together with a guide for inputting a phone number, on the display; receiving, from the user, the phone number; making a call using the received phone number; receiving a second verification code through the call; determining that the first verification code and the second verification code are matched; and in response to the determining, transmitting information for payment using the phone number.

In some embodiments of the present disclosure, a system to handle automatic payment and non-payment is described. The system may include an automatic payment terminal including a display, configured to perform a payment process of the user for a service; a non-payment settlement server communicatively connected to the automatic payment terminal, configured to perform a non-payment settlement process; and an external communication interface module configured to connect the non-payment settlement server with an external telephone network to enable to make and receive a call. The automatic payment terminal is configured to receive, from the user, a first input indicating an absence of a payment means; in response to the reception of the first input, display collection clauses on the display; receive, from the user, a second input indicating an agreement for the collection clauses; generate, in response to the reception of the second input, a first verification code; display the generated first verification code together with a guide for inputting a phone number, on the display; and receive, from the user, the phone number. The non-payment settlement server is configured to receive the first verification code and the phone number from the automatic payment terminal; make a call using the received phone number through the external communication interface module; receive a second verification code through the call; determine that the first verification code and the second verification code are matched; and in response to the determination, transmit information for payment using the phone number.

In some embodiments, a non-transitory computer readable storage medium that includes one or more instructions. The one or more instructions, when executed by a system to handle automatic payment and non-payment, may cause the system to perform receiving, from a user using a service associated with the system, a first input indicating an absence of a payment means; in response to the reception of the first input, displaying collection clauses on a display of the system; receiving, from the user, a second input indicating an agreement for the collection clauses; generating, in response to the reception of the second input, a first verification code to display the generated first verification code together with a guide for inputting a phone number; receiving, from the user, the phone number; making a call using the received phone number; receiving a second verification code through the call; determining that the first verification code and the second verification code are matched; and in response to the determining, transmitting information for payment using the phone number.

The foregoing summary is illustrative only and is not intended to be in any way limiting. In addition to the illustrative embodiments and features described above, further embodiments and features will become apparent by reference to the drawings and the following detailed description.

### BRIEF DESCRIPTION OF THE DRAWINGS

The foregoing and other features of the present disclosure will be described in detail with reference to the accompanying drawings. Understanding that these drawings depict only several examples in accordance with the disclosure and are, therefore, not to be considered limiting of its scope, the disclosure will be described with additional specificity and detail through use of the accompanying drawings, in which:
**FIG. 1** is a diagram illustrating an example automatic payment and non-payment handling system, in accordance with at least some embodiments of the present disclosure;
**Fig. 2A** is a diagram illustrating that a service fee is displayed on an automatic payment terminal of the example automatic payment and non-payment handling system, in accordance with at least some embodiments of the present disclosure;
**Fig. 2B** is a diagram illustrating that a collection guide and an agreement button are displayed on the automatic payment terminal of the example automatic payment and non-payment handling system, in accordance with at least some embodiments of the present disclosure;
**Fig. 2C** is a diagram illustrating that a guide for inputting a verification code and a phone number are displayed on the automatic payment terminal of the example automatic payment and non-payment handling system, in accordance with at least some embodiments of the present disclosure;
**Fig. 3** is a flow diagram illustrating an example process of a method performed on the automatic payment terminal, in accordance with at least some embodiments of the present disclosure;
**Fig. 4A** is a flow diagram illustrating an example process performed on a non-payment settlement server, in accordance with at least some embodiments of the present disclosure;
**Fig. 4B** is a flow diagram illustrating an example process performed on a non-payment settlement server, in accordance with at least some other embodiments of the present disclosure;
**Fig. 5** is a diagram illustrating a computer program product that can be used at the automatic payment and non-payment handling system, in accordance with at least some embodiments of the present disclosure; and
**Fig. 6** is a block diagram of an example embodiment of a computing device arranged in accordance with at least some embodiments of the present disclosure.

### DETAILED DESCRIPTION

Hereafter, embodiments and examples will be described in detail with reference to the accompanying drawings so that the present disclosure may be readily implemented by those skilled in the art. However, it is to be noted that the present disclosure is not limited to the embodiments and examples but can be embodied in various other ways.

The present disclosure, generally, relates to a system, a method, a non-transitory computer readable storage medium and a program stored therein to handle automatic payment at an automatic payment terminal and a non-payment settlement process.

In the present disclosure, a user may use a service provided at a place of a business, and pay corresponding service fees through an automatic payment terminal. Such automatic payment terminal may be set up at various places where services are provided, for example, places related to movie theaters, parking lots, meeting rooms for sharing, *etc.* The automatic payment terminal according to the present disclosure may be a device operating with a touch screen on a digital signage or a device including a display screen and input buttons.

A system to handle automatic payment and non-payment includes an automatic payment terminal and a non-payment settlement server, wherein the non-payment settlement server is communicatively connected to the automatic payment terminal to perform a non-payment settlement process when receiving information regarding an absence of any payment means from a user. Further, the non-payment settlement server is communicatively connected to an external communication interface module to connect the server with an external telephone network to enable to make and receive a call.

Typical example of forwarding payment information for non-paid fees to a user of a service is transmitting the payment information to a mobile device of the user. In an example according to the present disclosure, the automatic payment terminal may generate a verification code after receiving, from the user of the service, information regarding an absence of any payment means and an agreement for collection, and transmit related information to the non-payment settlement server. The non-payment settlement server may receive a phone number and the verification code input by the user through the automatic payment terminal, and if the received verification code is verified, transmit the payment information using the received phone number.

In this manner, the service can terminate the service by receiving the payment information, even if unexpected situations such as a loss of a payment means is occurred, and when the user proceeds payment thereafter, the system can terminate the payment process.

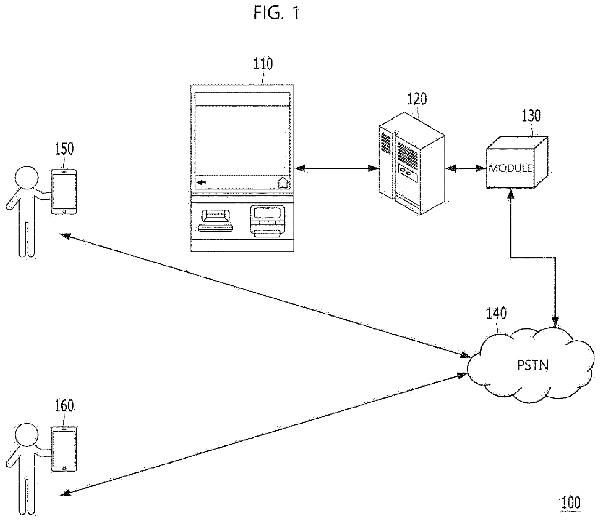

FIG. 1 is a diagram illustrating an example automatic payment and non-payment handling system 100, in accordance with at least some embodiments of the present disclosure. Example automatic payment and non-payment handling system 100 may include an automatic payment terminal 110, non-payment settlement server 120 communicatively connected thereto, an external communication interface module 130 connecting non-payment settlement server 120 with a public switched telephone network (PSTN) 140. Non-payment settlement server 120 may be connected to personal mobile phones 150 and 160 through PSTN 140.

In an example, automatic payment terminal 110 may be set up at a place where the service can be provided without any staff. The place may include, for example, a movie theater, a cafeteria, a restaurant, a parking lot, a meeting room for sharing, *etc.,* and automatic payment terminal 110 may be set up at outside and/or inside of such place. Further, although automatic payment terminal 110 is described as a device operating with a touch screen on a digital signage, it is possible to be implemented as a device including a display screen and input buttons, instead. Further, automatic payment terminal 110 and non-payment settlement server 120 are connected through a network, and such network may include, for example, a PAN (personal area network), a LAN (local area network), a WAN (wide area network), a cable network, a satellite network, a cellular network, a GSM (Global System for Mobile Communications) network, a CDMA (Code Division Multiple Access) network, an LTE (Long Term Evolution) network, an LTE-A (Long Term Evolution-Advanced) network, a WiMax (Interoperability for Microwave Access) network and a Wi-Fi (Wireless Fidelity) network, but may not be limited thereto. Herein, non-payment settlement server 120 may be a stand-alone server such as a single computing device, a server farm comprising multiple servers, a distributed network, a cloud-computing configuration, and/or any computing devices having other data transmitting/receiving functions, data identification functions and data processing functions.

External communication interface module 130 may support establishing a wired communication channel or a wireless communication channel between non-payment settlement server 120 and PSTN 140 and performing communications through the established communication channel. External communication interface module 130 may be operated independently with non-payment settlement server 120 and may include one or more communication processors supporting wired communication or wireless communication. In accordance with an embodiment, external communication interface module 130 may connect non-payment settlement server 120 and PSTN 140 via a remote network (e.g., a long-range communication network, such as a cellular network, an internet or a computer network (e.g., LAN or WAN)) or a short-range network (e.g., a short-range communication network, such as Bluetooth, Wi-Fi direct or IrDA (infrared data association)). Non-payment settlement server 120 enables making a call through PSTN 140 to mobile phones 150 and 160 and receiving the call from mobile phones 150 and 160.

In an embodiment, the user of the service may use automatic payment terminal 110 to pay the fees for the service. When the user has a payment means, he/she may proceed with payment by pushing a pay button displayed on a screen of automatic payment terminal. On the other hand, when the user does not have any payment means, he/she may push another button indicating an absence of a payment means. Automatic payment terminal 110 may receive a first input indicating an absence of a payment means, and in response to the reception of the first input, display a guide for collection clauses on a display of the system. Then, the user may proceed to a next step by pushing an agreement button displayed on the display.

Automatic payment terminal 110 may receive a second input indicating an agreement for the collection clauses from the user. In response to the reception of the second input, automatic payment terminal 110 may generate a first verification code, and transmit it to non-payment settlement server 120. Automatic payment terminal 110 may display the generated first verification code together with a guide for inputting a phone number. Automatic payment terminal 110 may receive the phone number from the user, and transmit it to non-payment settlement server 120. In an example, the phone number input by the user is a phone number of mobile phone 150 of the user and the user has mobile phone 150.

Non-payment settlement server 120 may receive the phone number of the user from automatic payment terminal 110, and make a call using the received phone number through the connected external communication interface module. Non-payment settlement server 120 may receive a second verification code from the user through the call, and determine that the first verification code received from automatic payment terminal 110 and the second verification code received from the user are matched. In response to the determination of the match of the verification codes, non-payment settlement server 120 may transmit information for payment using the received phone number.

In further some examples, non-payment settlement server 120 may terminate the service, in response to transmitting the information for payment to mobile phone 150 of the user using the received phone number. For example, the information for payment may include at least one of the fees to be paid, the provided service details regarding the fees, the account number for paying the fees and a simple remittance service link. Non-payment settlement server 120 may determine that the fees are paid into an account corresponding to the account number and may perform, in response to the determining that the fees are paid, a payment completion process for the service used by the user.

In some other examples, automatic payment and non-payment handling system 100 may be related to a payment managing of a parking lot. In these examples, the provided service details may further include entry time into the parking lot and exit time from the parking lot, of a vehicle of the user.

In some other embodiments, when the user has neither payment means nor mobile phone 150, the user can proceed with paying the fees and terminating the service with a cooperation by a third person who may be an acquaintance of the user. In the same way as in the above examples, automatic payment terminal 110 may generate the first verification code after receiving the information indicating the absence of the payment means and the agreement for the collection clauses, and transmit it to non-payment settlement server 120. Automatic payment terminal 110 may display the generated first verification code and the guide for inputting the phone number on the display, and receive, from the user, a third input indicating an absence of a mobile phone of the user.

Automatic payment terminal 110 may display a guide for inputting a phone number of a mobile phone of the third person in response to the reception of the third input, and the user may input the phone number of the acquaintance of the user that is not the phone number of the user, i.e., the phone number of the third person. Automatic payment terminal 110 may receive the phone number of the mobile phone of the third person from the user, and transmit it to non-payment settlement server 120.

Non-payment settlement server 120 may receive the phone number of the third person from automatic payment terminal 120, and make a call through the connected external communication interface 130 using the received phone number of the third person. For example, the call may be a collect call of which fees are charged to the third person, and may provide the third person with information that a non-payment settlement process for the user is now in progress. Non-payment settlement server 120 may receive the second verification code from the third person connected through the collect call. Non-payment settlement server 120 may determine that the first verification code received from automatic payment terminal 110 and the second verification code received from the third person are matched. In response to the match of the verification codes, non-payment settlement server 120 may transmit the information for the payment to mobile phone 160 using the received phone number of the third person.

In some examples, when the fees are not paid into an account corresponding to the transmitted account number over a predetermined time period, non-payment settlement server 120 may proceed with a collection process. The collection process can be proceeded by transmitting a message, such as a reminder and/or arranging a call with a specialized collection consultant, using the corresponding telephone number.

In an embodiment, non-payment settlement server 120 may monitor unpaid cases periodically, and if a case that the fees are not paid over a predetermined time period is identified, it may calculate consulting fees of a collection consultant. The consultant fees can be obtained, for example, by multiplying expected consulting time by cost per time. Herein, the cost per time may be an hourly wage of the consultant. For example, when the expected consulting time is 1 hour and the hourly wage of the collection consultant is 10 dollars, the consulting call with the collection consultant can be proceeded only if the unpaid fees are larger than 10 dollars.

In this example, if the consulting fees are same with or more than the unpaid fees for the service, non-payment settlement server 120 may retransmit the information for payment using the phone number. Meanwhile, if the consulting fees are less than the unpaid fees for the service, non-payment settlement server 120 may allocate a work to the collection consultant to proceed with a telephone collection consultation by the collection consultant.

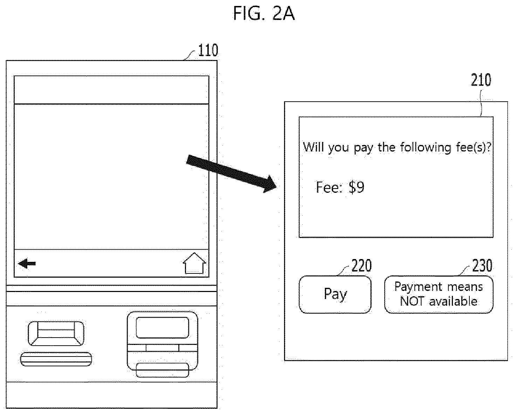

Figs. 2A-2C show proceeding with a payment process on an automatic payment terminal of an example automatic payment and non-payment handling system, in accordance with at least some embodiments of the present disclosure. Although the automatic payment terminal used by the user is illustrated as a device operating with a touch screen on a digital signage such as automatic payment terminal 110, it is not limited thereto.

Fig. 2A is a diagram illustrating that a service fee is displayed on an automatic payment terminal 110 of the example automatic payment and non-payment handling system, in accordance with at least some embodiments of the present disclosure. In an example, a user of the service may use automatic payment terminal 110 to pay fees for the use of the service. Automatic payment terminal 110 may display the fees for the use of the service and a payment guide 210 on a display and also display "Pay" button 220 and a "Payment means NOT available" button 230.

When the user has a payment means, he/she may push "Pay" button 220 displayed on the display of automatic payment terminal 110. Automatic payment terminal 110 may receive the input of "Pay" button 220 to enable the user to pay the fees using a credit card or a cash. The payment means may further include using a mobile payment service.

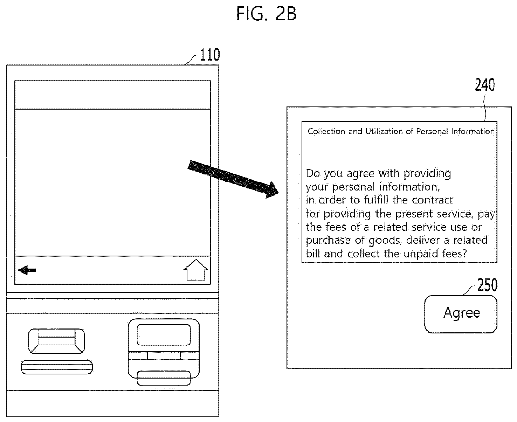

When the user does not have any payment means, he/she may push "Payment means NOT available" button 230 displayed on the display of automatic payment terminal 110. Automatic payment terminal 110 may receive, from the user, a first input indicating an absence of the payment means. The next step of the payment process that the automatic payment terminal displays a collection guide on the display in response to the reception of the first input, will be 1described in reference to Fig. 2B.

Fig. 2B is a diagram illustrating that a collection guide and an agreement button are displayed on automatic payment terminal 110 of the example automatic payment and non-payment handling system, in accordance with at least some embodiments of the present disclosure. In an example, in response to the reception of the first input indicating the absence of the payment means, automatic payment terminal 110 may display a guide 240 for collection clauses and an "Agree" button 250 on the display of automatic payment terminal. The guide for the collection clauses may include contents regarding collection and utilization of the personal information.

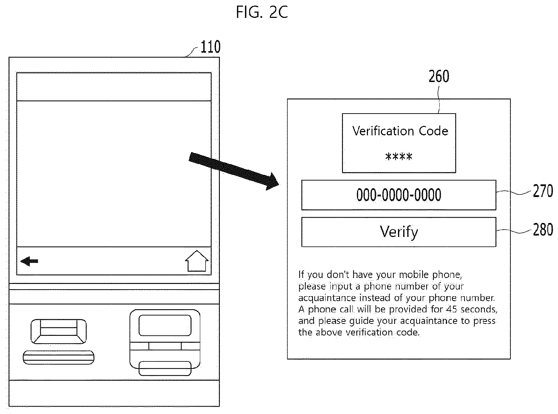

The user may read the collection clauses for the collection utilization, and push "Agree" button 250. Automatic payment terminal 110 may receive, from the user, a second input indicating the agreement for the collection clauses. In response to the reception of the second input, automatic payment terminal 110 may generate a first verification code, and/or transmit it to a non-payment settlement server (e.g., non-payment settlement server 120 of Fig. 1). The next step of the payment process that in response to the reception of the second input, automatic payment terminal 110 displays a guide for inputting a verification and a phone number, will be described in reference to Fig. 2C.

Fig. 2C is a diagram illustrating that a guide for inputting a verification code and a phone number are displayed on the automatic payment terminal of the example automatic payment and non-payment handling system, in accordance with at least some embodiments of the present disclosure. Automatic payment terminal 110 may display the generated first verification code 260, a phone number input window 270, a "Verify" button 280 on the display. Automatic payment terminal 110 may display a guide for inputting a phone number, and further display a "I don't have my mobile phone" button (not shown).

When the user has a mobile phone, he/she may see the verification code displayed on the automatic payment terminal, and input a phone number through a phone number input window 270. Automatic payment terminal 110 may receive the phone number from the user, and transmit it to the non-payment settlement server. The user may push "Verify" button 280 after inputting the phone number. Automatic payment terminal 110 may receive the input of "Verify" button 280, and transmit it to the non-payment settlement server.

The non-payment settlement server may make a call for verification to a mobile phone corresponding to the received phone number, and the user may receive the call using the mobile phone. The user may input the verification code shown on automatic payment terminal 110 through the call. The non-payment settlement server may determine that the second verification code received from the user and the first verification code received from automatic payment terminal 110 are matched. When the verification codes are matched, the non-payment settlement server may transmit information for payment to the mobile device of the user using the received phone number.

When the user does not have the mobile phone of the user, he/she may push "I don't have my mobile phone" button (not shown). Automatic payment terminal 110 may receive a third input indicating an absence of the mobile phone of the user, from the user. In response to the reception of the third input, automatic payment terminal 110 may display a guide for inputting a phone number of a third person. The user may input the phone number of an acquaintance, i.e., the third person. Automatic payment terminal 110 may receive the phone number of a mobile phone of the third person from the user, and transmit it to non-payment settlement server 120.

Non-payment settlement server 120 may make a call for verification using the received phone number of the third person, and the call may be a collect call of which fees are charged to the third person. Non-payment settlement server 120 may provide a guide informing of a non-payment settlement process for the user in progress, and the user may inform the third person of his/her situation through the call. The user may forward the verification code shown in automatic payment terminal 110 to the third person so that the third person can input the verification code. Non-payment settlement server 120 may receive the second verification code from the third person through the collect call.

Non-payment settlement server 120 may determine that the first verification code received from automatic payment terminal 110 and the second verification code received from the third person are matched. When the verification codes are matched, non-payment settlement server 120 may transmit the information for payment to the mobile phone of the third person using the received phone number.

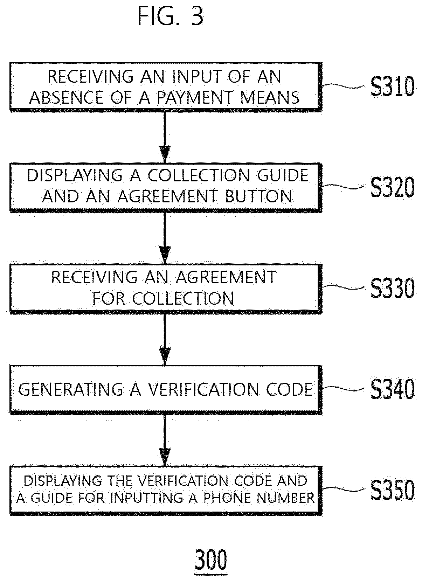

Fig. 3 is a flow diagram illustrating an example process of a method performed on an automatic payment terminal, in accordance with at least some embodiments of the present disclosure. One example of the automatic payment terminal may be, but not limited to, automatic payment terminal 110 illustrated at Fig. 1. Process 300 shown in Fig. 3 may include one or more operations, actions, or functions as illustrated by one or more of blocks S310, S320, S330, S340 and/or S350. Meanwhile, the outlined operations shown in Fig. 3 are only provided as examples and some of the operations may be optional, combined into fewer operations, or expanded into additional operations without detracting from the essence of the disclosed embodiments. Process 300 may begin at block S310, "RECEIVING AN INPUT OF AN ABSENCE OF A PAYMENT MEANS."

Before Process 300 begins at block S310, a user may use a service facility, such as, for example, a movie theater, a cafeteria, a restaurant, a parking lot, a meeting room for sharing, *etc.* The automatic payment terminal may be set up at outside and/or inside of such place, and the user can use the automatic payment terminal to pay the fees for a service, thereby terminating the service.

At block S310, the automatic payment terminal may receive a first input indicating an absence of a payment means. When the user of the service, does not have enough payment means or any payment means, he/she may push a button of an absence of a payment means displayed on a display of the automatic payment terminal to cause the automatic payment terminal to transmit the first input indicating then absence of the payment means. Process 300 may be followed by block S320, "DISPLAYING A COLLECTION GUIDE AND AN AGREEMENT BUTTON," from block S310.

At block S320, in response to the reception of the first input, the automatic payment terminal may display a guide for collection clauses and an agreement button for the collection clauses. The collection clauses for allowing the deferred payment may include a guide regarding a collection and a utilization of the personal information. Process 300 may be followed by block S330, "RECEIVING AN AGREEMENT FOR COLLECTION," from block S320.

At block S330, the user may push an agreement button to input a second input indicating the user read the collection clauses and agreed such collection clauses, into the automatic payment terminal. Process 300 may be followed by block S340, "GENERATING A VERIFICATION CODE," from block S330.

At block S340, the automatic payment terminal may generate a first verification code in response to the reception of the second input. The verification code generated by the automatic payment terminal may include two or more numbers. Also, the automatic payment terminal may transmit the generated first verification code to a non-payment settlement server. The non-payment settlement server may add the first verification code received from the automatic payment terminal into a database. Process 300 may be followed by block S350, "DISPLAYING THE VERIFICATION CODE AND A GUIDE FOR INPUTTING A PHONE NUMBER," from block S340.

At block S350, the automatic payment terminal may display the generated first verification code and a guide for inputting a phone number on the display. In a further example, the automatic payment terminal may also display a button regarding an absence of a mobile phone of the user. When the user does not have the mobile phone of the user, he/she may push "I don't have my mobile phone" button (not shown) displayed on the display. The automatic payment terminal may receive a third input indicating an absence of the mobile phone of the user, from the user. In response to the reception of the third input, the automatic payment terminal may display a guide for inputting a phone number of a third person.

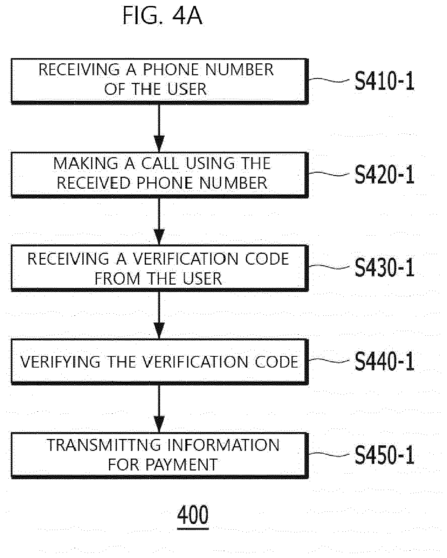

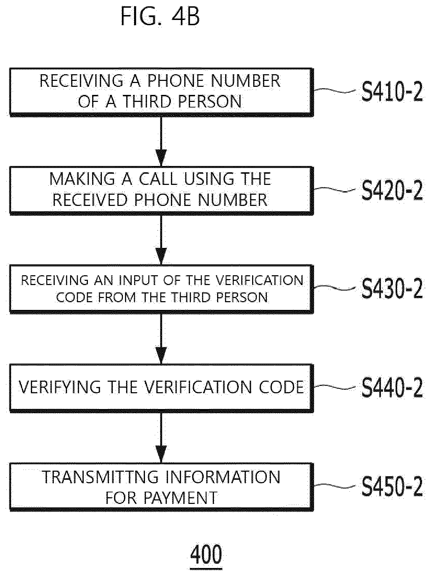

Fig. 4A is a flow diagram illustrating an example process performed on a non-payment settlement server, in accordance with at least some embodiments of the present disclosure, and Fig. 4B is a flow diagram illustrating an example process performed on a non-payment settlement server, in accordance with at least some other embodiments of the present disclosure. When the user has the mobile phone, process 300 may be followed by a process 400 of Fig. 4A, while when the user does not have the mobile phone, process 300 may be followed by a process 400 of Fig. 4B.

When the user has his/her mobile phone, process 400 may begin at block S410-1, "RECEIVING A PHONE NUMBER OF THE USER." At block S410-1, the user may input a phone number of the user through the automatic payment terminal. The automatic payment terminal may receive the input of the phone number from the user, and transmit it to the non-payment settlement server. The non-payment settlement server may receive the phone number of the user from the automatic payment terminal. Process 400 may be followed by block S420-1, "MAKING A CALL USING THE RECEIVED PHONE NUMBER," from block S410-1.

At block S420-1, the non-payment settlement server may make a call through an external communication interface module communicatively connected to a network, using the received phone number. The user may receive the call using the mobile phone. Process 400 may be followed by block S430-1, "RECEIVING A VERIFICATION CODE FROM THE USER," from block S420-1.

At block S430-1, the user may input a second verification code through the connected call. The non-payment settlement server may receive the second verification code input by the user, and add it to the database. Process 400 may be followed by block S440-1, "VERIFYING THE VERIFICATION CODE," from block S430-1.

At block S440-1, the non-payment settlement server may determine that the first verification code received from the automatic payment terminal and the second verification code received from the user are matched. If the verification codes are matched, process 400 may be followed by block S450-1, "TRANSMITTNG INFORMATION FOR PAYMENT," from block S440-1.

At block S450-1, the non-payment settlement server may transmit information for payment using the received phone number, in response to the determination that the verification codes are matched. When the user receives the information for the payment, the service may be terminated. Terminating the service can be independent from processing the non-payment settlement. The information for payment may include, for example, at least one of the fees to be paid, the provided service details regarding the fees, the account number for paying the fees and a simple remittance service link.

When the user does not have his/her mobile phone, process 400 may begin at block S410-2, "RECEIVING A PHONE NUMBER OF A THIRD PERSON." The user may input a phone number of an acquaintance, i.e., a third person. The automatic payment terminal may receive the phone number of the third person from the user, and transmit it to the non-payment settlement server. Process 400 may be followed by block S420-2, "MAKING A CALL USING THE RECEIVED PHONE NUMBER," from block S410-2.

At block S420-2, the non-payment settlement server may make a call through an external communication interface module communicatively connected to a network, using the received phone number. The third person may receive the call using a mobile phone. For example, the call received by the third person may be a collect call of which fees are charged to the third person, and the non-payment settlement server may provide a guide informing of a non-payment settlement process for the user in progress. Process 400 may be followed by block S430-2, "RECEIVING A VERIFICATION CODE FROM THE THIRD PERSON," from block S420-2.

At block S430-2, the third person may input a second verification code through the call connected. For example, the user may inform the third person of a situation that the user faces, and forward the verification code shown in the automatic payment terminal to the third person. The third person may input the verification code forwarded from the user as the second verification code through the call, and the non-payment settlement server may receive the second verification code from the third person. The non-payment settlement server may add the received second verification code into the database. Process 400 may be followed by block S440-2, "VERIFYING THE VERIFICATION CODE," from block S430-2.

At block S440-2, the non-payment settlement server may determine that the first verification code received from the automatic payment terminal and the second verification code received from the third person are matched. If the verification codes are matched, process may be followed by block S450-2, "TRANSMITTING INFORMATION FOR PAYMENT," from block S440-2.

At block S450-2, the non-payment settlement server may transmit information for payment using the received phone number, in response to the determination that the verification codes are matched. When the third person receives the information for the payment, the service may be terminated.

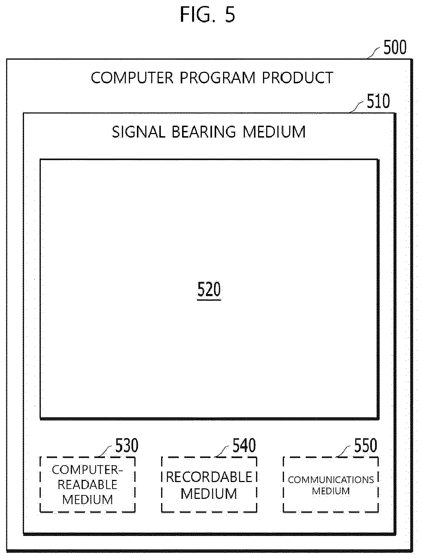

FIG. 5 is a diagram illustrating an example computer program product 500 that can be used at the automatic payment and non-payment handling system, in accordance with at least some embodiments of the present disclosure. An illustrative embodiment of example computer program product 500 is provided using a signal bearing medium 510. In some embodiments, signal bearing medium 510 of one or more computer program products 500 may include a computer readable medium 530, a recordable medium 540 and/or a communication medium 550.

Instructions 520 included in signal bearing medium 510 may be executed by a computing device such as automatic payment terminal 110 and non-payment settlement server 120 illustrated in Fig. 1. Instructions 520 may include at least one of: one or more instructions for receiving, from a user using a service associated with the system, a first input indicating an absence of a payment means; one or more instructions for displaying collection clauses on a display of the system, in response to the reception of the first input; one or more instructions for receiving, from the user, a second input indicating an agreement for the collection clauses; one or more instructions for generating a first verification code to display the generated first verification code together with a guide for inputting a phone number, in response to the reception of the second input; one or more instructions for receiving, from the user, the phone number; one or more instructions for making a call using the received phone number; one or more instructions for receiving a second verification code through the call; one or more instructions for determining that the first verification code and the second verification code are matched; and one or more instructions for transmitting information for payment using the phone number in response to the determining.

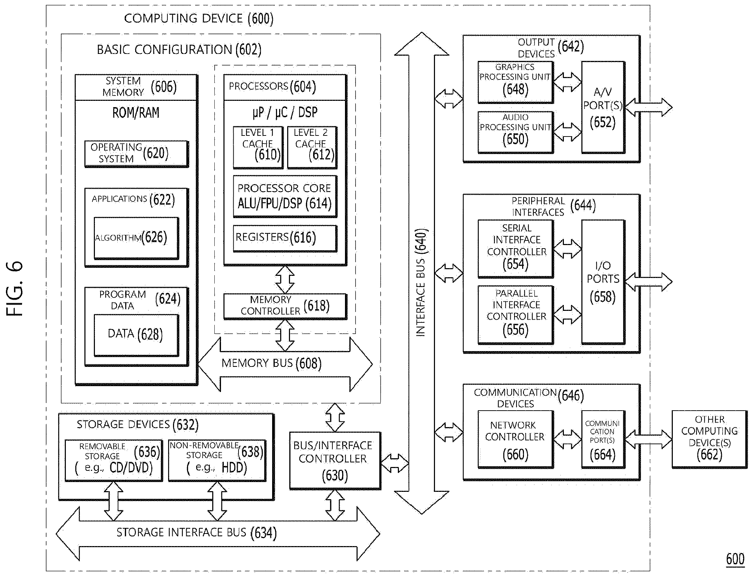

**Fig. 6** is a block diagram of an example embodiment of a computing device arranged in accordance with at least some embodiments of the present disclosure. In an example basic configuration 602, computing device 600 includes one or more processors 604 and a system memory 606. A memory bus 608 may be used for communicating between processor 604 and system memory 606.

Depending on the desired configuration, processor 604 may be of any type including but not limited to a microprocessor ("µP"), a microcontroller ("µC"), a digital signal processor ("DSP"), or any combination thereof. Processor 604 may include one more levels of caching, such as a level one cache 610 and a level two cache 612, a processor core 614, and registers 616. An example processor core 614 may include an arithmetic logic unit ("ALU"), a floating point unit ("FPU"), a digital signal processing core ("DSP Core"), or any combination thereof. A memory controller 618 may also be used with processor 604, or in some implementations memory controller 618 may be an internal part of processor 604.

Depending on the desired configuration, system memory 606 may be of any type including but not limited to volatile memory (such as RAM), non-volatile memory (such as ROM, flash memory, etc.) or any combination thereof. System memory 606 may include an operating system 620, one or more applications 622, and program data 624. Application 622 may include algorithm 626 arranged to perform functions as described herein, including function blocks and/or actions described regarding automatic payment terminal 110, non-payment settlement server 120 of Fig. 1 and/or processes 300 and 400 of Figs. 3 and 4. Program data 624 may include, data 628 to use together with algorithm 626, for example, data corresponding to static network environment, *etc.* In some embodiments, application 622 may be arranged to operate with program data 624 on operating system 620 such that implementations for determining optimized transmitting environment can be provided, as described herein. For example, automatic payment terminal 110 and non-payment settlement server 120 may include all or parts of computing device 600 and perform all or parts of application 622 such that implementations for determining optimized transmitting environment can be provided as described herein. This described basic configuration 602 is illustrated in FIG. 6 by those components within the inner dashed line.

Computing device 600 may have additional features or functionality, and additional interfaces to facilitate communications between basic configuration 602 and any required devices and interfaces. For example, a bus/interface controller 630 may be used to facilitate communications between basic configuration 602 and one or more data storage devices 632 via a storage interface bus 634. Data storage devices 632 may be removable storage devices 636, non-removable storage devices 638, or a combination thereof. Examples of removable storage and non-removable storage devices include magnetic disk devices such as flexible disk drives and hard-disk drives ("HDD"), optical disk drives such as compact disk ("CD") drives or digital versatile disk ("DVD") drives, solid state drives ("SSD"), and tape drives to name a few. Example computer storage media may include volatile and nonvolatile, removable and non-removable media implemented in any method or technology for storage of information, such as computer readable instructions, data structures, program modules, or otherdata.

System memory 606, removable storage devices 636 and non-removable storage devices 638 are examples of computer storage media. Computer storage media includes, but is not limited to, RAM, ROM, EEPROM, flash memory or other memory technology, CD-ROM, digital versatile disks (DVD or other optical storage, magnetic cassettes, magnetic tape, magnetic disk storage or other magnetic storage devices, or any other medium which may be used to store the desired information and which may be accessed by computing device 600. Any such computer storage media may be part of computing device 600.

Computing device 600 may also include an interface bus 640 for facilitating communication from various interface devices (e.g., output devices 642, peripheral interfaces 644, and communication devices 646) to basic configuration 602 via bus/interface controller 630. Example output devices 642 include a graphics processing unit 648 and an audio processing unit 650, which may be configured to communicate to various external devices such as a display or speakers via one or more A/V ports 652. Example peripheral interfaces 644 include a serial interface controller 654 or a parallel interface controller 656, which may be configured to communicate with external devices such as input devices (e.g., keyboard, mouse, pen, voice input device, touch input device, etc.) or other peripheral devices (e.g., printer, scanner, etc.) via one or more I/O ports 658. An example communication device 646 includes a network controller 660, which may be arranged to facilitate communications with one or more other computing devices 662 over a network communication link via one or more communication ports 664.

Computing device 600 may also be implemented as a personal computer including both laptop computer and non-laptop computer configurations. Further, computing device 600 may be implemented as a part of wireless base station and other wireless system or device.

The above description of the present disclosure is provided for the purpose of illustration, and it would be understood by a person with ordinary skill in the art that various changes and modifications may be made without changing technical conception and essential features of the present disclosure. Thus, it is clear that the above-described embodiments are illustrative in all aspects and do not limit the present disclosure. For example, each component described to be of a single type can be implemented in a distributed manner. Likewise, components described to be distributed can be implemented in a combined manner.

The claimed subject matter is not limited in scope to the particular implementations described herein. For example, some implementations may be in hardware, such as employed to operate on a device or combination of devices, for example, whereas other implementations may be in software and/or firmware. Likewise, although claimed subject matter is not limited in scope in this respect, some implementations may include one or more articles, such as a signal bearing medium, a storage medium and/or storage media. This storage media, such as CD-ROMs, computer disks, flash memory, or the like, for example, may have instructions stored thereon, that, when executed by a computing device, such as a computing system, computing platform, or other system, for example, may result in execution of a processor in accordance with the claimed subject matter, such as one of the implementations previously described, for example. As one possibility, a computing device may include one or more processing units or processors, one or more input/output devices, such as a display, a keyboard and/or a mouse, and one or more memories, such as static random access memory, dynamic random access memory, flash memory, and/or a hard drive.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

## Claims

1. A method performed on a system to handle automatic payment and non-payment, comprising:
receiving, from a user using a service associated with the system, a first input indicating an absence of a payment means;
in response to the reception of the first input, displaying collection clauses on a display of the system;
receiving, from the user, a second input indicating an agreement for the collection clauses;
generating, in response to the reception of the second input, a first verification code to display, on the display, the generated first verification code together with a guide for inputting a phone number;
receiving, from the user, the phone number;
making a call using the received phone number;
receiving a second verification code through the call;
determining that the first verification code and the second verification code are matched; and
in response to the determining, transmitting information for payment using the phone number.

2. The method of claim 1, wherein the phone number is a phone number of a mobile phone of the user and the user inputs the second verification code through the call.

3. The method of claim 1, wherein the phone number is a phone number of a mobile phone of a third person, the call is a collect call of which fees are charged to the third person, and the third person inputs the second verification code through the collect call, and
the method further comprises:
between the generating a first verification code and the receiving the phone number,
receiving, from the user, a third input indicating an absence of a mobile phone of the user;
in response to the reception of the third input, displaying a guide for inputting a phone number of a mobile phone of the third person;
between the making a call using the received phone number and the receiving a second verification code,
providing the third person with information that a non-payment settlement process for the user is in progress; and
providing a phone call connection between the user and the third person through the call.

4. The method of any preceding claim, further comprising:
after the transmitting information for payment using the phone number, terminating the service.

5. The method of any preceding claim, wherein the information for payment includes at least one of the fees to be paid, the provided service details regarding the fees, the account number for paying the fees and a simple remittance service link.

6. The method of claim 5, wherein the system to handle automatic payment and non-payment relates to a payment managing of a parking lot, and the provided service details include an entry time into the parking lot and an exit time from the parking lot, of a vehicle of the user.

7. The method of claim 5 or 6, further comprising:
determining that the fees are paid into an account corresponding to the account number; and
in response to the determining that the fees are paid, performing a payment completion process for the use of the service by the user.

8. The method of claim 5 or 6, further comprising:
if the fees are not paid into an account corresponding to the account number over a predetermined time period, calculating consulting fees of a collection consultant;
if the consulting fees are the same with or more than unpaid fees for the service, retransmitting the information for payment using the phone number; and
if the consulting fees are less than the unpaid fees for the service, allocating a telephone consultation by the collection consultant.

9. A system to handle automatic payment and non-payment, comprising:
an automatic payment terminal including a display, configured to perform a payment process of the user for a service;
a non-payment settlement server communicatively connected to the automatic payment terminal, configured to perform a non-payment settlement process; and
an external communication interface module configured to connect the non-payment settlement server with an external telephone network to enable to make and receive a call,
wherein the automatic payment terminal is configured to:
receive, from the user, a first input indicating an absence of a payment means;
in response to the reception of the first input, display collection clauses on the display;
receive, from the user, a second input indicating an agreement for the collection clauses;
generate, in response to the reception of the second input, a first verification code;
display, on the display, the generated first verification code together with a guide for inputting a phone number; and
receive, from the user, the phone number; and
wherein the non-payment settlement server is configured to:
receive the first verification code and the phone number from the automatic payment terminal;
make a call using the received phone number through the external communication interface module;
receive a second verification code through the call;
determine that the first verification code and the second verification code are matched; and
in response to the determination, transmit information for payment using the phone number.

10. The system of claim 9, wherein the phone number is a phone number of a mobile phone of the user and the user inputs the second verification code through the call.

11. The system of claim 9, wherein the phone number is a phone number of a mobile phone of a third person, the call is a collect call of which fees are charged to the third person, and the third person inputs the second verification code through the collect call, and
wherein the automatic payment terminal is further configured to:
after the displaying the generated first verification code and before the receiving from the user, the phone number,
receive, from the user, a third input indicating an absence of a mobile phone of the user;
in response to the reception of the third input, display a guide for inputting a phone number of a mobile phone of the third person on the display;
after the making a call using the received phone number and before the receiving a second verification code,
provide the third person with information that the non-payment settlement process for the user is in progress; and
provide a phone call connection between the user and the third person through the call.

12. The system of any of claims 9-11, wherein the information for payment includes at least one of the fees to be paid, the provided service details regarding the fees, the account number for paying the fees and a simple remittance service link.

13. The system of claim 12, wherein the non-payment settlement server is further configured to:
determine that the fees are paid into an account corresponding to the account number; and
in response to the determination that the fees are paid, perform a payment-completion process for the use of the service by the user.

14. The system of claim 12, wherein the non-payment settlement server is further configured to:
if the fees are not paid into an account corresponding to the account number over a predetermined time period, calculate consulting fees of a collection consultant;
if the consulting fees are same with or more than unpaid fees for the service, retransmitting the information for payment using the phone number; and
if the consulting fees are less than the unpaid fees for the service, allocating a telephone consultation by the collection consultant.

15. A non-transitory computer readable storage medium that includes one or more instructions that, when executed by a system to handle automatic payment and non-payment, cause the system to perform:
receiving, from a user using a service associated with the system, a first input indicating an absence of a payment means;
in response to the reception of the first input, displaying collection clauses on a display of the system;
receiving, from the user, a second input indicating an agreement for the collection clauses;
generating, in response to the reception of the second input, a first verification code to display, on the display, the generated first verification code together with a guide for inputting a phone number;
receiving, from the user, the phone number;
making a call using the received phone number;
receiving a second verification code through the call;
determining that the first verification code and the second verification code are matched; and
in response to the determining, transmitting information for payment using the phone number.
